# EUROPEAN PATENT APPLICATION

(11) **EP 4 575 434 A1**
(43) Date of publication of application: **25.06.2025**
(21) Application number: 24221170.4
(22) Date of filing: 18.12.2024
(51) Int. Cl.: G01K 1/143, G01K 1/16, G01K 3/00, G01K 7/22, H01R 13/66

(54) **HIGH-CURRENT CONTACT DEVICE FOR TRANSMITTING ELECTRICAL ENERGY**

(30) Priority: 18.12.2023 DE 102023135532
(71) Applicant: TE Connectivity Solutions GmbH, 8200 Schaffhausen (CH)
(72) Inventor: KOWARSCH, Philipp, 8200 Schaffhausen (CH); CALLIES, Thorsten, 8200 Schaffhausen (CH); BLUMENSCHEIN, Rudi, 8200 Schaffhausen (CH); TOTH, Gerzson, 8200 Schaffhausen (CH); BRABETZ, Florian, 8200 Schaffhausen (CH); DRESSEL, Andre Martin, 8200 Schaffhausen (CH)
(74) Representative: Patentanwaltskanzlei WILHELM & BECK

(57) **Abstract**

A high-current contact device (1) for transmitting electrical energy, in particular for a vehicle, having a contact housing (2), having at least one contact element (3) secured to the contact housing (2), having at least one temperature sensor (10) and having a support plate (6), wherein the support plate (6) has a top side (7) and an underside (8), wherein the top side (7) transitions over a side wall (9) into the underside (8), wherein the side wall (9) of the support plate (6) faces the contact element (3), wherein the temperature sensor (10) is arranged on the side wall (9) of the support plate (6), and wherein the temperature sensor (10) is designed to detect a temperature of the contact element (3).

## Description

The invention relates to a high-current contact device for transmitting electrical energy, in particular for a vehicle, and to a method for producing a high-current contact device.

DE 10 2020 116 533 A1 discloses a high-current contact device, wherein the high-current contact device has an electrical contact element and a temperature sensor. The temperature sensor is located on a top side of a support plate, spaced apart from the electrical contact element. The support plate is arranged perpendicular to a longitudinal axis of the contact element.

The object of the invention is to provide a high-current contact device in which the measurement of the temperature of the electrical contact element is improved. In addition, the object of the invention is to provide an improved method for producing a high-current contact device.

The objects of the invention are achieved by means of the independent patent claims.

Advantageous developments are specified in the dependent claims.

A high-current contact device for transmitting electrical energy, in particular for a vehicle, is proposed. The high-current contact device has a contact housing and at least one contact element that is secured to the contact housing. Also provided is a temperature sensor that is secured to a support plate. The support plate has a top side and an underside, wherein the top side of the support plate transitions over a side wall into the underside of the support plate. The side wall of the support plate faces the contact element. The temperature sensor is secured to the side wall of the support plate. The temperature sensor is designed to detect a temperature of the contact element. The arrangement of the temperature sensor on the side wall of the support plate, the front side of which faces the contact element, means that the temperature sensor is arranged closer to the contact element. In addition, this arrangement means that a larger surface area of the temperature sensor is arranged closer to the electrical contact element. This improves the temperature transfer from the contact element to the temperature sensor. In addition, the support plate does not shade the temperature radiation. Furthermore, this arrangement of the contact element means that the support plate with the contact element may have a low installation height and is thus able to be arranged in the vicinity of the contact element in the high-current contact device in a space-saving manner. This improves the temperature transfer between the contact element and the temperature sensor. The longitudinal axis of the contact element is preferably arranged parallel to an outer surface of at least one portion of the contact element.

In one embodiment, the side wall of the support plate is orientated at an angle between 0 degrees and 45 degrees with respect to a longitudinal axis of the contact element. The side wall is preferably arranged parallel to a longitudinal axis of the contact element. The top side and the underside of the support plate are preferably arranged parallel to one another and the side wall is orientated at a right angle to the top side and the underside of the support plate. Depending on the selected embodiment, the side wall may also be orientated at a different angle to the top side and/or to the underside. Depending on the selected embodiment, the support plate may also be arranged at a different angle with respect to the longitudinal axis of the contact element. In this embodiment, although it may be arranged perpendicular to the top side and to the underside of the support plate, the side wall is not arranged parallel to a longitudinal axis of the contact element. However, due to the arrangement of the temperature sensor on the front side of the side wall of the support plate, these arrangements also have an improved heat transfer between the contact element and the temperature sensor compared to an arrangement of the temperature sensor on the top side or the underside of the support plate.

In a further embodiment, the support plate has first electrical contacts on the side wall. The first electrical contacts may be designed in the form of electrically conductive coatings. Depending on the selected embodiment, the first electrical contacts may be arranged in indentations of the side wall. For example, the indentations in cross section may be formed perpendicular to a plane of the side wall in a circular segment shape. In addition, the coatings constituting the first electrical contacts may be formed as sleeve-segment-shaped coatings. The temperature sensor has further electrical contacts, wherein the second electrical contacts are electrically conductively connected to the first electrical contacts of the support plate. For example, an electrically conductive connecting material, in particular solder, is used for the electrically conductive connection between the first and second electrical contacts.

In a further embodiment, the support plate has at least one indentation on the side wall, wherein the first electrical contacts are arranged in the indentation. The first electrical contacts may have electrically conductive coatings that are applied to the side wall. The electrically conductive coatings are connected to the electrical lines of the support plate. Solder material may be provided for the formation of the electrically conductive connection between the electrically conductive coatings of the support plate and the second electrical contacts of the temperature sensor.

The first and the second indentation may be arranged parallel to one another and preferably have a similar or identical shape.

In a further embodiment, the support plate has at least two indentations on the side wall that are spaced apart from one another. The indentations are arranged laterally at a predetermined distance. A first electrical contact of the support plate is formed in a first indentation. A further first electrical contact of the support plate is formed in a second indentation. Depending on the selected embodiment, the two indentations may be formed in a base area in a further indentation that is installed in the side wall of the support plate.

In a further embodiment, the indentations are guided, starting from the top side and/or the underside of the support plate, at least a predetermined distance along the thickness of the support plate. The indentations are preferably formed from the top side to the underside of the support plate. The electrical lines of the support plate may be arranged on the top side of the support plate and extend up to or into the indentations and in particular form an electrically conductive connection with the electrically conductive coatings of the first electrical contacts of the support plate.

In a further embodiment, solder material is arranged on the side wall of the support plate, wherein the solder material produces an electrically conductive connection between the first electrical contacts of the support plate and the second electrical contacts of the temperature sensor. Depending on the selected embodiment, the solder material may be arranged in particular in the indentations.

In a further embodiment, the side wall of the support plate has a further indentation, wherein the temperature sensor is at least partly arranged in the further indentation, and wherein the first electrical contacts of the support plate are arranged in the further indentation. Depending on the selected embodiment, the temperature sensor may be fully arranged in the further indentation. In addition, the two indentations may be arranged in the further indentation for the formation of the first electrical contacts of the support plate. In particular, the two indentations of the first electrical contacts are arranged in a base area of the further indentation. The base area is set back from the side wall and preferably arranged parallel to the side wall.

In a further embodiment, the support plate has a portion with a predetermined width projecting from the side wall. The thickness of the portion corresponds to the thickness of the carrier plate and the portion is part of the carrier plate.

The temperature sensor is arranged on the side wall of the projecting portion. Due to the projecting portion, the temperature sensor is less thermally connected to the further material of the support plate. The temperature sensitivity of the temperature sensor for detecting the temperature of the contact element is thus improved.

In a further embodiment, a heat conducting element is arranged between the electrical contact element and the temperature sensor. The heat conducting element is designed to conduct heat from the contact element toward the temperature sensor. The heat conducting element may in particular be of electrically insulating design. In addition, the heat conducting element is made of a heat conducting material. In a further embodiment, the heat conducting element is thermally coupled to the contact element, and bears for example directly against the contact element. In addition, in one embodiment, the heat conducting element is thermally coupled to the temperature sensor and bears for example directly against the temperature sensor. Providing the heat conducting element improves the heat conduction between the contact element and the temperature sensor.

In one embodiment, the heat conducting element has a recess, wherein the temperature sensor is at least partly arranged in the recess. Depending on the selected embodiment, the temperature sensor may also be fully arranged in the recess of the heat conducting element. In particular, the temperature sensor may bear at least by way of one side surface and in particular by way of several side surfaces directly against the heat conducting element. This arrangement of the temperature sensor in the heat conducting element improves the thermal coupling between the contact element and the temperature sensor. Depending on the selected embodiment, a segment of the carrier plate may also be arranged in the recess of the heat conducting element. This further improves the thermal coupling between the contact element and the temperature sensor.

In a further embodiment, the electrical contacts are arranged in the indentations of the side wall, wherein the indentations in cross section are formed perpendicular to a plane of the side wall in a circular segment shape.

In a further embodiment, an embodiment for the circuit for the temperature sensor is provided on the support plate, wherein the finished circuit is connected via electrical lines to the temperature sensor.

The support plate may be designed for example as a printed circuit board.

An improved method for producing a contact device is proposed, wherein the temperature sensor is first secured to the side wall of the support plate, wherein two solder depots are arranged on a top side of the support plate adjacent to the temperature sensor. The solder depots are laterally spaced apart from one another. The solder depots are melted by a heat treatment, as a result of which the liquid solder of the solder depots at the top side of the support plate flows into two separate solder streams on the side wall of the support plate. The liquid solder is thus introduced between first electrical contacts of the support plate and second electrical contacts of the temperature sensor. After cooling, the cured solder forms an electrically conductive connection between first electrical contacts of the support plate and the second electrical contacts of the temperature sensor.

The temperature sensor may be secured to a bearing surface of the side wall, for example using an adhesive. The bearing surface is preferably between the two first contacts of the support plate.

In a further embodiment, at least one recess is introduced into the side wall of the support plate before the temperature sensor is secured to the side wall of the support plate. Two recesses are preferably introduced into the side wall, with each of the recesses being provided to form a first electrical contact of the support plate. The recess may be formed for example in cross section perpendicular to the side wall in a circular segment shape.

The recesses may extend, starting from the top side of the support plate, a predetermined distance toward the underside, in particular up to the underside.

In addition, a further recess may preferably be formed in the side wall of the support plate. The recess for the first electrical contacts may be introduced into a base area of the further recess. The base area is set back from a plane of the side wall. The further recess is used to receive the temperature sensor at least in part and in particular in full.

The invention is explained in more detail below with reference to figures. In the figures:
Fig. 1 shows a schematic illustration of a high-current contact device having a contact housing, an electrical contact element and a support plate having a temperature sensor;
Fig. 2 shows a schematic cross-sectional illustration of the support plate and the temperature sensor that is arranged on a front side wall of the support plate;
Fig. 3 shows a perspective illustration of the support plate and the temperature sensor according to figure 1;
Fig. 4 shows another embodiment of a support plate, wherein two indentations are provided on the side wall of the support plate for the formation of the first electrical contacts;
Fig. 5 shows a schematic illustration of a temperature sensor that is electrically conductively connected to the support plate of figure 4 by way of the first electrical contacts;
Fig. 6 shows a schematic illustration of a further embodiment of a support plate having a further indentation and two indentations for the formation of the first electrical contacts;
Fig. 7 shows a schematic perspective illustration of a further embodiment of a support plate with an arrangement of the temperature sensor in the further recess;
Fig. 8 shows a further embodiment of a support plate having a further recess, wherein the temperature sensor is arranged in the further recess;
Fig. 9 shows a further embodiment of a support plate having a further recess, wherein the temperature sensor is arranged in the further recess;
Fig. 10 shows a further embodiment of a support plate, wherein the support plate has a projecting portion, wherein the temperature sensor is arranged on the side wall of the projecting portion;
Fig. 11 shows a schematic illustration of the arrangement of figure 1, wherein a heat conducting element is provided between the contact element and the temperature sensor;
Fig. 12 shows a top view of the arrangement of figure 11;
Fig. 13 shows a schematic illustration of a further embodiment of the heat conducting element having a support plate according to figure 10;
Fig. 14 shows a schematic illustration of a method for producing a high-current contact device.

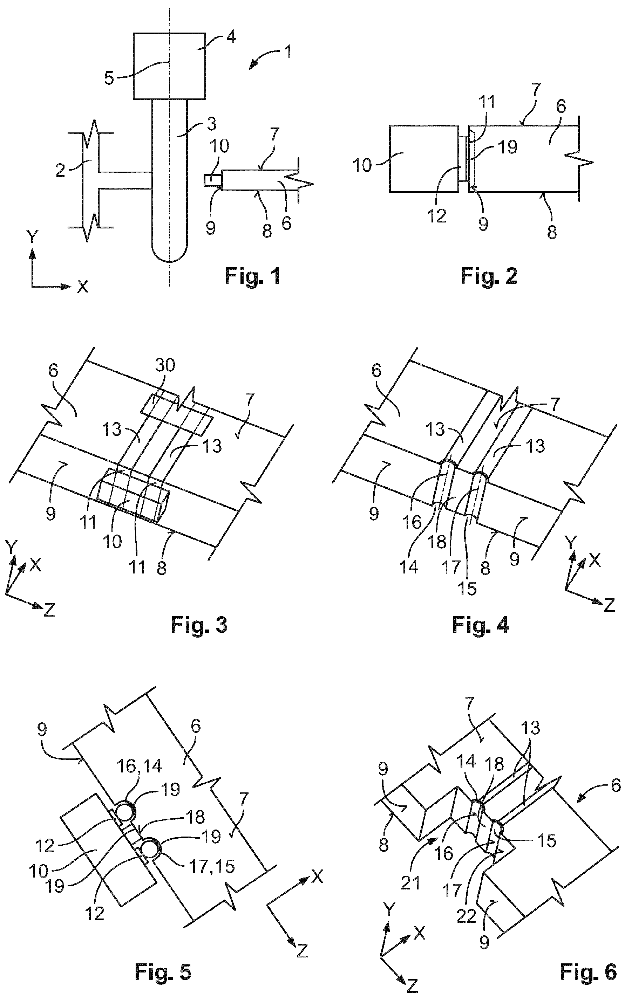

Figure 1 shows a schematic illustration of a high-current contact device 1 having a contact housing 2, wherein an electrically conductive contact element 3 is secured to the contact housing 2. In the illustrated embodiment, the contact element is in the form of a contact pin, the first end of which has an electrical connection region for an electrical cable. The contact element 3 has a longitudinal axis 5, illustrated as a dashed line. For example, the contact element 3 has, at least in a subsection, a cylindrical shape that is aligned along the longitudinal axis 5. A support plate 6 that is also mechanically connected to the contact housing 2 is provided laterally spaced apart from the contact element 3. The support plate 6 has a top side 7 and an underside 8. The top side 7 of the support plate 6 transitions over a side wall 9 into the underside 8 of the support plate 7. The side wall 9 faces the contact element 3. A temperature sensor 10 is arranged on the side wall 9. The arrangement of the temperature sensor 10 on the side wall 9 and not on the top side 7 or on the underside 8 means that the temperature sensor 10 is arranged closer to the contact element 3. In addition, a transfer of heat from the contact element 3 to the temperature sensor 10 is not covered by the support plate 6.

In the illustrated exemplary embodiment, the support plate 6 is of plate-shaped design. Depending on the selected embodiment, the support plate 6 may be of a bar-like or block-like design. In addition, in the illustrated embodiment, the top side 7 and the underside 8 are arranged parallel to one another. Depending on the selected embodiment, the top side 7 and the underside 8 may also be arranged at a different angle to one another. In addition, in the illustrated embodiment, the plane of the side wall 9 is arranged perpendicular to the plane of the top side 7 and perpendicular to the plane of the underside 8. Depending on the selected embodiment, the plane of the side wall 9 may also be arranged at a different angle to the top side and to the underside. The advantages of the proposed arrangement of the temperature sensor 10 on the front side wall 9 of the support plate 6 are also achieved when the side wall 9 is not arranged parallel to the longitudinal axis 5 of the contact element 3. For example, the side wall 9 and the longitudinal axis 5 of the contact element 3 may also be arranged at an angle of 0 to 45 degrees. A 0 degree angle indicates the arrangement of the side wall 9 parallel to the longitudinal axis 5.

Figure 2 shows a schematic enlarged illustration of the arrangement of first electrical contacts 11 on the side wall 9 of the support plate 6. The first electrical contacts 11 are connected for example to an evaluation circuit via electrical lines, not illustrated, arranged on or in the support plate 6. In addition, the temperature sensor 10 has second electrical contacts 12 that face the first electrical contacts 11 and are connected to the first electrical contacts 11 either directly or via an electrically conductive connecting material.

Figure 3 shows the arrangement of the first electrical contacts 11 on the side wall 9 in a schematic, perspective partial illustration of the support plate 6. In this illustration, the temperature sensor 10 is illustrated as transparent so that the arrangement of the first electrical contacts 11 is more visible. The first electrical contacts 11 are guided up to the top side 7 of the support plate 6 and extend over a central portion of the side wall 9, in particular to the underside 8 of the support plate 6. The first electrical contacts 11 are made of electrically conductive material and are designed in particular as coating surfaces.

Figure 4 shows a schematic perspective partial illustration of an embodiment of the support plate 6, in which the support plate 6 has a first and a second indentation 14, 15 on the side wall 9. In the illustrated embodiment, the indentations 14, 15 are formed from the top side 7 to the underside 8. The indentations have for example a cylinder segment shape. The indentations 14, 15 in cross section perpendicular to the side wall 9 thus preferably have a cylinder-segment-shaped contour. Electrically conductive coatings 16, 17 are provided in the indentations 14, 15 and, in the illustrated embodiment, are guided to the top side 7 of the support plate 6 and are electrically conductively connected to the electrical lines 13. A bearing surface 18, represented by the side wall 9, is formed between the two indentations 14, 15. In the illustrated exemplary embodiment, the bearing surface 18 is arranged in a plane with respect to the side wall 9.

Figure 5 shows a schematic illustration of the support plate 6 of figure 4, wherein a temperature sensor 10 is attached to the bearing surface 18 via a connecting layer 19. In addition, the temperature sensor 10 has two of the electrical contacts 12, each of which faces one of the indentations 14, 15 and is connected via an electrically conductive material to the electrically conductive coatings 16, 17 of the first electrical contacts 11. For example, the second electrical contacts 12 of the temperature sensor 10 may be connected to the first electrical contacts 11 of the support plate 6 via solder material as an electrically conductive connecting material 20. The connecting layer 19 may be formed for example of an adhesive material. Depending on the selected embodiment, another connecting material may also be used to form the connection layer 19.

Figure 6 shows a schematic perspective illustration of a further embodiment of a support plate 6, in which a further indentation 21 is introduced into the side wall 9. In the illustrated embodiment, the further indentation 21 extends from the top side 7 to the underside 8 of the support plate 6. Depending on the selected embodiment, the further indentation 21 can only be introduced into the side wall 9, without reaching into the top side and/or the underside of the support plate.

The further indentation 21 has a base area 22 arranged set back from the adjacent region of the side wall 9. The base area 22 may be arranged perpendicular to the top side 7 and underside 8 of the support plate. The first electrical contacts 11 are arranged on the base area 22. Depending on the selected embodiment, the first electrical contacts 11 may be formed in indentations 14, 15, as shown and schematically explained in figure 4. For this purpose, electrically conductive coatings 16, 17, which are connected to the electrical lines 13, are arranged in the indentations 14, 15.

The further indentation 21 preferably has a size such that the temperature sensor 10 can be at least partly, in particular fully, arranged in the further indentation 21. Depending on the selected embodiment, the temperature sensor 10 can project laterally beyond the front side of the side wall 9 when arranged in the further indentation 21. The electrical contacting of the temperature sensor 10, which is arranged in the further indentation 21, can be carried out for example as in figure 5.

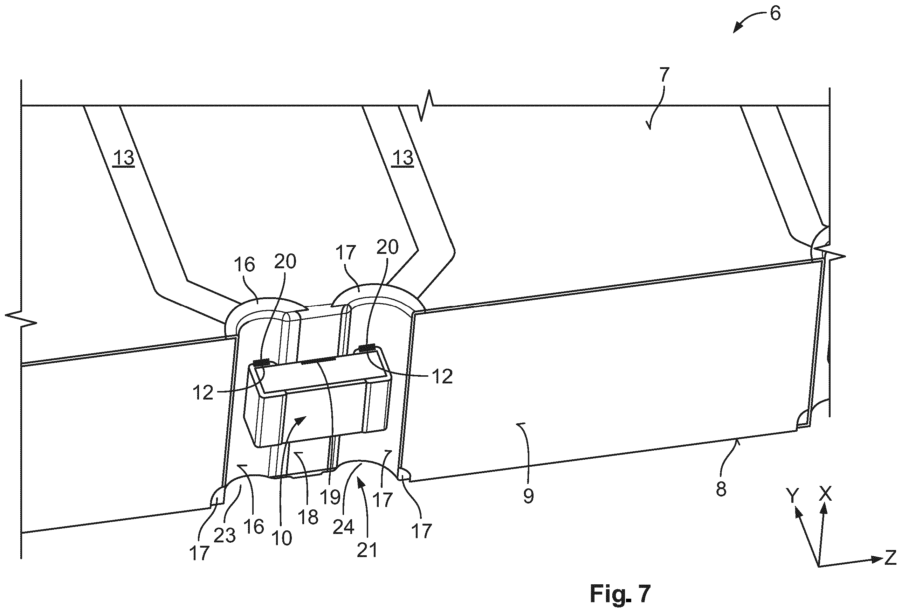

Figure 7 shows a schematic perspective illustration of a further embodiment of a support plate that has a further indentation 21. In this embodiment, the further indentation 21 again extends from the top side 7 to the underside 8 of the support plate 6. The indentation 8 is formed in the manner of two cylinder-segment-shaped recesses 23, 24 that are connected to one another via a contact surface 18. The bearing surface 18 is set back inwards from the side wall 9. Thus, as is shown schematically in the figure, at least part of the temperature sensor 10 can be received in the further indentation 21. The first and the second recess 23, 24 are provided with an electrically conductive coating 16, 17.

The bearing surface 18 has no electrically conductive coating, such that the two coatings 16, 17 are electrically insulated from one another. In the illustrated embodiment, the coatings 16, 17 are guided to the top side 7, wherein electrical lines 13, which are connected to the coatings 16, 17, are arranged at the top side 7. The temperature sensor 10 bears by way of an underside against the bearing surface 18 and is connected for example to the bearing surface via a connecting layer 19. In addition, second electrical contacts 12 of the temperature sensor 10, which are also formed on the underside of the temperature sensor 10, are connected to the coatings 16, 17 via an electrically conductive material, in particular via solder material.

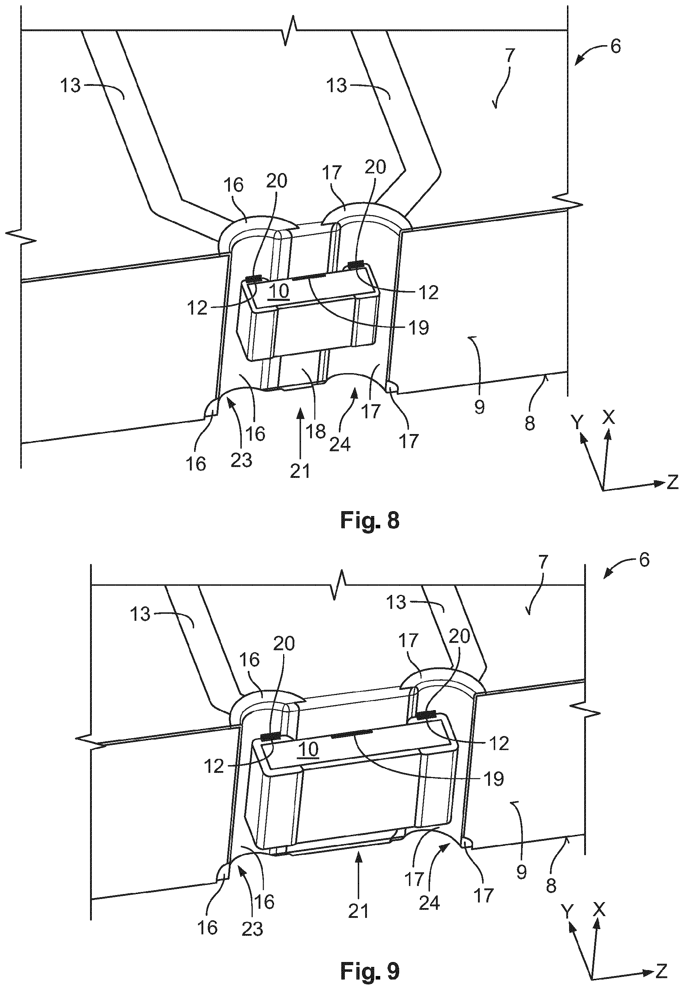

Figure 8 shows a further embodiment of a support plate 6 that is substantially formed according to the embodiment of figure 7, but wherein the further indentation 21 is formed deeper, such that the temperature sensor 10 can be fully arranged in the further indentation 21 without projecting beyond the side wall 9 on the front side.

Figure 9 shows another embodiment of a support plate 6 that is also substantially formed according to the embodiment of figure 7, but wherein the bearing surface 18 along the side wall 9 is designed to be longer than in the embodiments of figures 7 and 8. Otherwise, the arrangement and securing of the temperature sensor 10 is formed in the same way as the embodiments of figures 7 and 8.

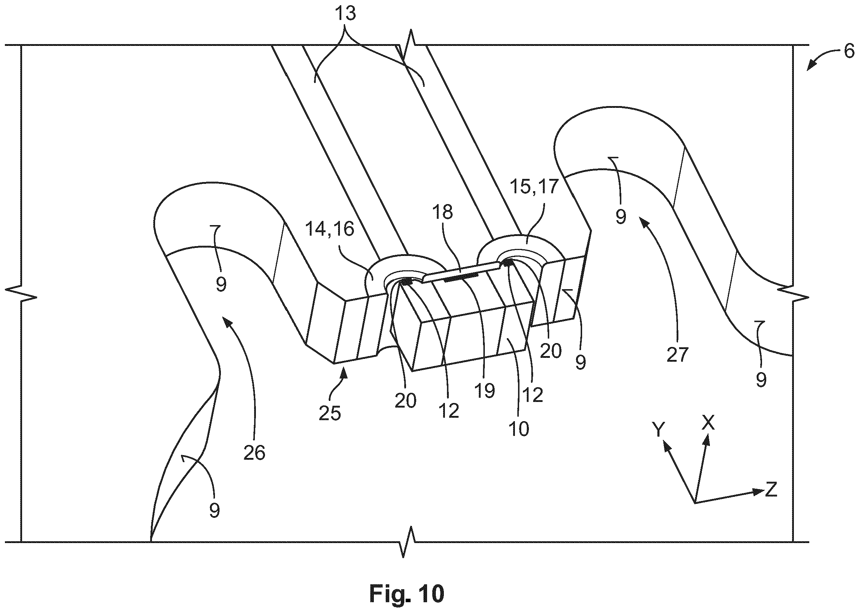

Figure 10 shows a further embodiment of a support plate 6, wherein the support plate 6 has a projecting portion 25. The projecting portion 25 may be realized for example by two recesses 26, 27. Also in this embodiment, the temperature sensor 10 is arranged on the front side of the side wall 9 of the support plate 6. Improved thermal insulation of the temperature sensor 10 with respect to the support plate 6 is realized by way of the projecting portion 25. The electrical contacting between the temperature sensor 10 and the first electrical contacts 11 of the support plate 6 can be realized according to the previously described embodiments of the electrical contacting. In the illustrated embodiment, two indentations 14, 15 are introduced into the side wall 9. Coatings 16, 17 that are connected to electrical lines 13 of the support plate 6 are provided in the indentations 14, 15. A non-electrically conductive bearing surface 18, on which the temperature sensor 10 is mechanically connected for example by means of a connecting layer 19, is formed between the coatings 16, 17. In addition, two of the electrical contacts 12 formed on the underside of the temperature sensor 10, are connected to the coatings 16, 17 for example via a connecting material 20, in particular solder material.

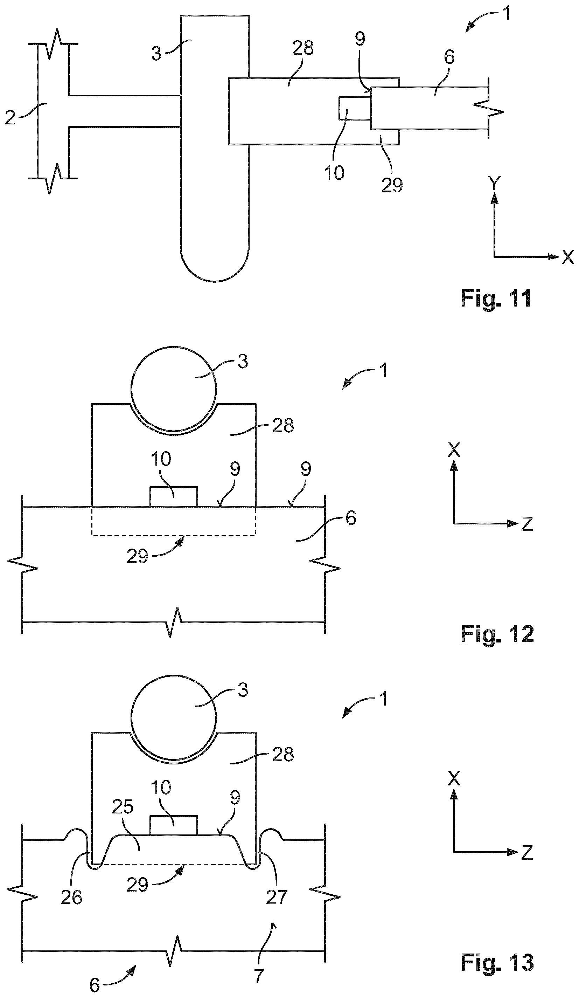

Figure 11 shows a schematic illustration of the arrangement of figure 1, wherein a heat conducting element 28 is additionally provided between the contact element 3 and the temperature sensor 10. The heat conducting element 28 is formed of a thermally conductive material and is preferably electrically insulating. Depending on the selected embodiment, the heat conducting element is thermally coupled to the contact element 3, in particular the heat conducting element 28 bears directly against the contact element 3. In addition, the heat conducting element 28 is thermally coupled to the temperature sensor, in particular the heat conducting element 28 bears directly against the temperature sensor. Depending on the selected embodiment, the heat conducting element 28 may also bear against the support plate 6. Depending on the selected embodiment, the heat conducting element has a recess 29, wherein the temperature sensor is at least partly arranged in the recess 29. Depending on the selected embodiment, the temperature sensor may also be fully arranged in the recess 29. In addition, at least a part of the support plate may also be arranged in the recess 29 of the heat conducting element 28.

Figure 12 shows a schematic cross section through the arrangement of figure 11, wherein it can be seen that the temperature sensor 10 and a part of the support plate 6 is arranged in the recess 29 of the heat conducting element 28. In an analogous manner, all of the embodiments of the support plate described can be thermally coupled to the heat conducting element, at least partly bear against the heat conducting element, in particular may be arranged in the recess 29 of the heat conducting element. As already explained, the recess 29 may be omitted without the heat element only partly bearing against the temperature sensor or also being arranged spaced apart from the temperature sensor 10.

Figure 13 shows a schematic illustration of a cross section through a high-current contact device 1 substantially designed according to figure 1, but wherein the support plate 6 is designed according to figure 10 and the projecting portion 25 is arranged with the temperature sensor 10 in the recess 29 of the heat conducting element 28.

The heat conducting element may also be of elastic design. For example, the heat conducting element has at least one matrix material comprising at least silicone and/or polyethylene and/or polyurethane and/or a temperature-stable plastic. For example, the following particulate fillers may be embedded in the matrix material: copper, aluminum, silver, aluminum oxide, aluminum nitride, silicon oxide, silicon nitride, boron, boron nitride, electrically conductive metal, an electrically non-conductive and thermally conductive metal compound, preferably based on iron or non-ferrous metals. The heat conducting element may have an elastic deformability of at least 1%, preferably 10% or up to 40%. The thermal conductivity of the heat conducting element may range from 0.9 watts per meter times Kelvin to 2 watts per meter times Kelvin. The heat conducting element is ideally designed to be electrically insulating, such that no electrically conductive connection between the electrical contact element and the temperature sensor or the support plate is produced even when the heat conducting element bears against the electrical contact element and the temperature sensor or the support plate.

The temperature sensor may for example be in the form of an SMD component, in particular an NTC element. For example, the high-current contact device may be provided to transmit electrical energy, for example in the range of 10 kWto 300 kW with a high current, for example between 3 amperes and 500 amperes. The electrical contact element heats up during this process. The temperature sensor is used to monitor the heating of the electrical contact element. The temperature sensor may be connected to an evaluation circuit that outputs a warning signal or outputs a shutdown signal for shutting down the power line via the high-current contact device when a maximum temperature of the contact element is reached.

The contact housing is at least partly formed of an electrically insulating material, such that the contact element is electrically insulated.

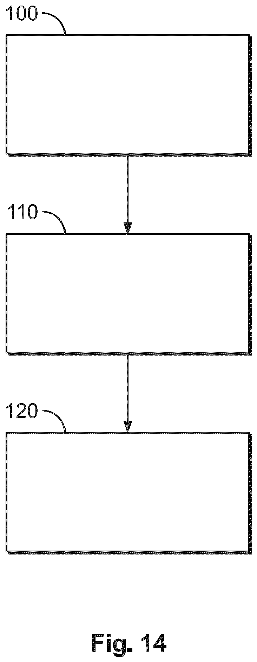

Figure 14 shows a schematic method sequence for producing a support plate for the high-current contact device. In the program point 100, the support plate is provided with first electrical contacts on the side wall. Subsequently, in a program point 110, a temperature sensor is secured to the bearing surface 18 between the two electrical contact elements, for example by way of a connecting layer 19. On the top side of the support plate, two solder depots are arranged adjacent to a first and a second indentation 14, 15. At a subsequent program point 120, the solder depots are melted, wherein the liquid solder flows into the indentations 14, 15 and is arranged between the coatings 16, 17 and the second electrical contacts 12 of the temperature sensor 10. After the liquid solder has cooled, the solder produces the electrically conductive connection between the second electrical contacts 12 of the temperature sensor 10 and the coatings 16, 17, that is to say the first electrical contacts 11 of the support plate 6.

The support plate 6 with the temperature sensor can then be secured to one of the described high-current contact devices, as shown for example in figure 1 or 11.

The described method is applicable to all illustrated exemplary embodiments of the support plate.

### List of reference signs

- 1: High-current contact device
- 2: Contact housing
- 3: Contact element
- 4: First connection area
- 5: Longitudinal axis
- 6: Support plate
- 7: Top side
- 8: Underside
- 9: Side wall
- 10: Temperature sensor
- 11: First electrical contacts
- 12: Second electrical contacts
- 13: Electrical lines
- 14: First indentation
- 15: Second indentation
- 16: First coating
- 17: Second coating
- 18: Bearing surface
- 19: Connecting layer
- 20: Electrically conductive connecting material
- 21: Further indentation
- 22: Base area
- 23: First cylinder-segment-shaped recess
- 24: Second cylinder-segment-shaped recess
- 25: Portion
- 26: First recess
- 27: Second recess
- 28: Heat conducting element
- 29: Recess
- 30: Evaluation circuit

## Claims

1. A high-current contact device (1) for transmitting electrical energy, in particular for a vehicle, having a contact housing (2), having at least one contact element (3) secured to the contact housing (2), having at least one temperature sensor (10) and having a support plate (6), wherein the support plate (6) has a top side (7) and an underside (8), wherein the top side (7) transitions over a side wall (9) into the underside (8), wherein the side wall (9) of the support plate (6) faces the contact element (3), wherein the temperature sensor (10) is arranged on the side wall (9) of the support plate (6), and wherein the temperature sensor (10) is designed to detect a temperature of the contact element (3).

2. The high-current contact device (1) as claimed in claim 1, wherein an angle of 0° to 45° is formed between the side wall (9) and a longitudinal axis (5) of the contact element (3), wherein in particular the side wall is arranged parallel to the longitudinal axis (5) of the contact element (3).

3. The high-current contact device (1) as claimed in claim 1 or 2, wherein the support plate (6) has first electrical contacts (11) on the side wall (9), wherein the first electrical contacts (11) are arranged in particular in indentations (14, 15) of the side wall (9), wherein in particular the indentations (14, 15) in cross section are formed perpendicular to a plane of the side wall (9) in a circular segment shape, wherein the temperature sensor (10) has second electrical contacts (12), wherein the second electrical contacts (12) are electrically conductively connected to the first electrical contacts (11).

4. The high-current contact device (1) as claimed in any one of the preceding claims, wherein the support plate (6) has at least one further indentation (21) on the side wall (9), wherein the first electrical contacts (11) are arranged in the further indentation (21), wherein the first electrical contacts have electrically conductive coatings (16, 17) on the side wall (9), wherein the coating (16, 17) are connected to electrical lines (13) of the support plate (6), and wherein in particular an electrically conductive connecting material (20) is arranged between the coatings (16, 17) and the second electrical contacts of the temperature sensor (10) in order to produce the electrically conductive connection.

5. The high-current contact device (1) as claimed in any one of the preceding claims, wherein the support plate (6) has at least two indentations (14, 15) on the side wall (9), wherein the indentations (14, 15) are laterally spaced apart from one another, wherein a respective first electrical contact (11) of the support plate (6) is arranged in a recess (14, 15), wherein in particular the two indentations are formed in a base area of a further indentation (21).

6. The high-current contact device (1) as claimed in any one of claims 4 or 5, wherein, starting from the top side (7) and/or the underside (8) of the support plate (6), the indentations (14, 15) extend at least a predetermined distance along the thickness of the support plate (6), wherein in particular the indentations (14, 15) extend from the top side (7) to the underside (8) of the support plate (6), wherein electrical lines (13) are arranged on the support plate (6), wherein the electrical lines (13) extend up to or into the indentations (14, 15) and are connected to the first electrical contacts (11).

7. The high-current contact device (1) as claimed in any one of claims 3 to 6, wherein solder material (20) is arranged on the side wall (9) of the support plate (6) and produces an electrically conductive connection between the first electrical contacts (11) of the support plate (6) and the second electrical contacts (12) of the temperature sensor (10), wherein the solder material is arranged in particular in the indentations (14, 15).

8. The high-current contact device (1) as claimed in any one of the preceding claims, wherein the side wall (9) of the support plate (6) has a further indentation (21), wherein the temperature sensor (10) is at least partly arranged in the further indentation (21), wherein in particular the temperature sensor (10) is fully arranged in the further indentation and wherein the first electrical contacts (11) are arranged in the further indentation (21).

9. The high-current contact device (1) as claimed in any one of the preceding claims, wherein the support plate (6) has a laterally projecting portion (25) with a predetermined width, wherein the temperature sensor (10) is arranged on the side wall (9) of the projecting portion (25).

10. The high-current contact device (1) as claimed in any one of the preceding claims, wherein a heat conducting element (28) is arranged between the contact element (3) and the temperature sensor (10), wherein the heat conducting element (28) conducts heat from the contact element (3) in the direction of the temperature sensor (10), wherein the heat conducting element (28) is in particular of electrically insulating design, wherein the heat conducting element (28) is coupled in particular thermally to the contact element (3) and bears in particular against the contact element (3) and/or wherein the heat conducting element (28) is coupled in particular thermally to the temperature sensor (10), in particular bears against the temperature sensor (10).

11. The high-current contact device (1) as claimed in claim 10, wherein the heat conducting element (28) has a recess (29), wherein the temperature sensor (10) is at least partly arranged in the recess (29), wherein the temperature sensor (10) is in particular fully arranged in the recess (29), and wherein in particular the heat conducting element (28) is in direct contact with the surface of the temperature sensor (10).

12. The high-current contact device as claimed in claim 10, wherein a segment of the support plate is arranged in the recess of the heat conducting element.

13. The high-current contact device (1) as claimed in any one of the preceding claims, wherein the first electrical contacts (11) are arranged in indentations (14, 15) of the side wall (9), wherein the indentations (14, 15) in cross section are formed perpendicular to a plane of the side wall (9) in a circular segment shape, wherein in particular the support plate (6) has an evaluation circuit (30) for the temperature sensor (10), wherein in particular the evaluation circuit (30) is connected to the temperature sensor (10) via electrical lines (13).

14. A method for producing a high-current contact device as claimed in any one of the preceding claims, wherein the temperature sensor is first secured to the side wall of the support plate, wherein two solder depots are arranged on a top side of the support plate adjacent to the temperature sensor, wherein the solder depots are melted by a heat treatment, where the liquid solder of the solder depots flows from the top side of the support plate in two separate solder streams onto the side wall of the support plate, wherein, after the solder flowing between the side wall of the support plate and electrical contacts of the temperature sensor has cooled, the cooled solder forms electrically conductive connections between the first electrical contacts of the support plate and the second electrical contacts of the temperature sensor.

15. The method as claimed in claim 14, wherein, before the temperature sensor is secured to the side wall of the support plate, at least one recess is inserted into the side wall starting from a top side, wherein the recess is provided to receive at least part of at least one electrical contact of the support plate and/or the temperature sensor.
